# EUROPEAN PATENT APPLICATION

(11) **EP 3 514 620 A1**
(43) Date of publication of application: **24.07.2019**
(21) Application number: 19020038.6
(22) Date of filing: 18.01.2019
(51) Int. Cl.: G03B 17/54, G03B 37/04

(54) **IMMERSIVE DISPLAY DEVICE**

(30) Priority: 21.01.2018 GB 201800095
(71) Applicant: Brewster, Barrie Dudley, Brighton, East Sussex BN1 8NF (GB)
(72) Inventor: Brewster, Barrie Dudley, Brighton, BN1 8NF (GB); Roberts, Matthew Grant, Brighton, BN2 6TJ (GB)

(57) **Abstract**

An improved device and methods for measuring and aligning immersive displays comprising one or more image source. The device typically comprises a laser rangefinder and a camera, mounted together on an actuated pan-tilt base. The image from the camera and data from the rangefinder are combined on a display with chosen elements of the original system design to guide the operator to align the system accurately. The visible beam and distance measurements from the laser rangefinder provide a further guide as to the correct alignment. Further methods are provided for continuous monitoring of the geometry of air-supported display screens and also for carrying out comprehensive measurements of the complete immersive display.

## Description

### Field of the invention

The invention pertains to a system and a method for aligning immersive displays, especially those with multiple image sources, in accordance with the original design intention. Methods are also provided for making partial or complete measurements of the display geometry to confirm that it conforms to the design or to be used for subsequent image calibration or alignment adjustments.

### Background of the invention

Immersive displays are widely used in fields including flight simulation, vehicle simulation and planetariums. Such displays may be used for purposes such as military training, civil training and entertainment, and typically combine sound and motion with high-resolution moving visual images displayed on a screen surface which substantially surrounds the user. Such screens are typically of curved form, such as part-cylindrical, part-spherical or part-spheroidal, and are designed to be substantially smooth and without seams or other features which might detract from the visual image. In order to project an image which substantially fills such a screen, it is usually necessary to use more than one projector. In order to achieve a convincing composite image with multiple projectors, when viewed by multiple users each with different viewpoints, it is usually necessary to warp the images from each projector to compensate for the effects of screen curvature or viewpoint. To avoid gaps in the composite image, the individual projected component images are usually arranged so as to overlap with one another. Being illuminated by more than one projector, these overlapping regions are liable to excessive illumination. Typically some form of blending is applied in these regions, in which the brightness of the combined images in the overlapping region is reduced progressively to reduce any discontinuity in image brightness. Such image blending may be by optical means or by digital means, whereby the brightness of a digital image in the blend region is reduced by software.

In order to achieve a convincing image, especially in displays using multiple projectors, accurate location, alignment and adjustment of the system components is essential. Because the screen may be of curved form and substantially free of seams or other features it is difficult to obtain a suitable visual reference or datum for such location, alignment and adjustment. A number of solutions have been proposed for providing some sort of non-invasive, "invisible" screen markers, but none of these has been entirely successful. As a result, the integration and optimisation of such display systems is complex and frequently entails an iterative trial-and-error process, requiring highly-skilled technicians.

Some simulator applications also require very high absolute positional accuracy in the displayed image. In a large system using multiple projectors, there is a high likelihood that a projector may fail. In order to minimise the time taken to restore the system, it is desirable to replace the failed projector with a spare, using identical warp and blend parameters. This will only produce satisfactory results if the alignment of the replacement projector is identical to that of the original. The preferred method to accurately align the display with the intended design is to use a theodolite - this is an expensive piece of equipment, and needs a skilled operator.

There is widespread use of screens which are supported by inflatable members or which rely on subatmospheric pressure to maintain their form. Such screens are particularly prone to changing shape due to variations in pressure, leading to a degradation in image quality and accuracy.

### Discussion of the related art

A number of methods are employed in the prior art to facilitate the positioning and alignment of multichannel display systems. Theodolites are widely used as the primary means of measurement, but these are costly and require skilled operators. An alternative method is to use a slide projector, adapted to project a test pattern, or a grid of azimuth and elevation angles or a template showing the intended positions of the display borders for each channel. In some cases the projector is equipped with a fish-eye lens in order that the projected pattern fills the entire display region. A theodolite can only measure or indicate one point at a time, so it is often desirable to supplement this with some means of applying a plurality of reference marks on the screen. To prevent these marks interfering with the displayed image they either need to be invisible to the human eye or erasable. To this end, marks which are only visible in UV light are sometimes used. Another approach is to embed small optical fibres in the screen which may be lit by LED's when needed. Clearly these cannot be easily repositioned in the event of an error, or if the display configuration is to be changed.

U.S. Pat. No. 7090361 issued to Barco N.V. Aug. 15, 2006 describes a maintenance tool comprising an array of individually adjustable light sources. This invention offers a non-invasive solution to displaying a plurality of markers, but each mark in the LED array must be manually set - typically using a theodolite. So although the invention solves the problem of non-invasive marking, it does not fully provide a solution for accurately transposing a design layout into a physical implementation. A 2-stage process is required:
- Each light source in the array must first be set in position using the theodolite (or other reference device)
- The projection system may then be adjusted using the light sources as a guide

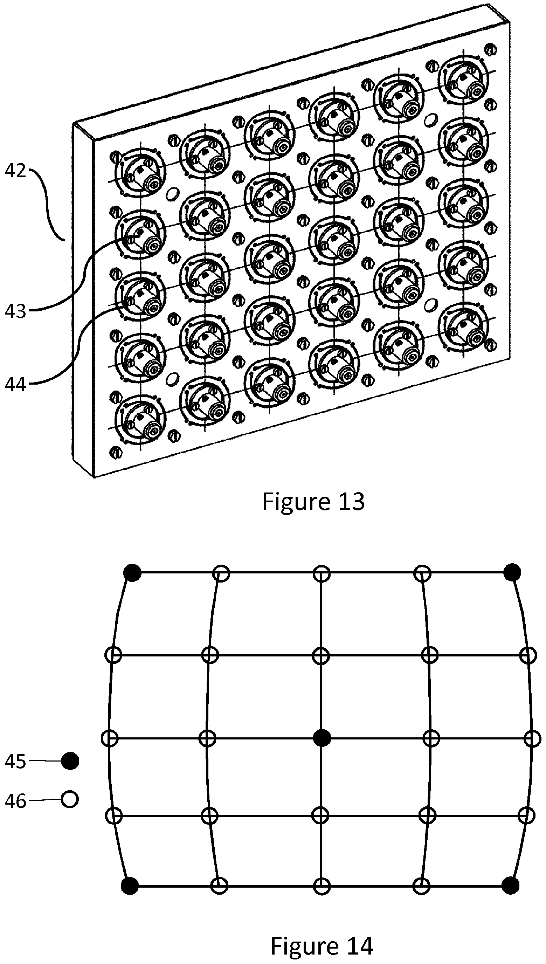

An example of a device according to this invention is Barco LDAT (Laser Diode Array Tool), having a 6 x 5 array of 30 adjustable solid state lasers. A User Guide for LDAT published as R597600/01 on 21^{st} January 2009 teaches that typically 5 of these lasers will be used as "outline lasers" (marking the centre and the 4 outline corners of the projection area) and the remainder (the example shows 20) will be used as "Warp lasers" (providing a test pattern or grid to mark reference points needed for warp corrections). Figure 13 shows the configuration of this prior art device, comprising a mounting frame (42), laser diodes (43), and deformable mountings (44) which permit the laser diodes to be directed at a chosen point. Figure 14 shows the typical usage of the device on a typical display channel, with 5 outline points (45) and 20 warp points (46).

When such a device is deployed in a multi-channel display system, it is likely that multiple arrays will be needed, making it a costly and bulky system. Alternatively the same array must be re-used for setting up each channel/ projector and reconfigured for each channel using the theodolite. Variations in screen geometry from nominal form (particularly in the case of inflatable screens) may affect the process, and result in many time-consuming iterations.

U.S. Pat. No. 8730130 issued to Richard E Pray, Barry J Williams, David Thomas and Mark A Radley describes a device comprising a gimbal-mounted laser rangefinder and camera and methods for creating a three-dimensional map of the screen surface and using the geometric data to perform geometric corrections, warping, blending, brightness and gamma-corrections. The teaching of this patent is concentrated almost exclusively on using such measurements to compensate (typically in software) for the image artefacts created by such a multi-channel display, and any errors in alignment. It teaches very little about how to ensure the system - particularly the projectors - may be positioned and aligned to minimise the amount of correction required. The device described relies on its control system being operatively connected to the image sources (e.g. projectors) so that the required grids and test patterns may be generated. This operative connection is essential to the automated calibration method described.

### Summary of invention

It is clear from the foregoing that there are many difficulties to be overcome in accurately transposing a theoretical design into a real-life installation in the case of complex, multi-channel immersive display systems. Failure to align the projection system faithfully can result in an iterative, time-consuming process, and the end result after blending and warping may be compromised. The prior art methods for automated calibration, blending and warping are helpful in compensating for any errors in alignment.

It is the object of the invention to provide a system and methods to solve the following problems:
- To accurately transpose a theoretical display design into a physical installation, using a manageable amount of equipment, at a reasonable cost, and requiring a moderate level of skill and experience.
- To solve the problem of providing accurate visual test patterns, or "landmarks" on a smooth featureless display screen.
   ∘ Such marks must be "non-invasive" - i.e. must be visible to the technician when performing alignment but invisible to the viewer when the display is in operation.
   ∘ It must be possible to apply such marks to the entire screen surface, preferably without the need for physical access (such as step-ladders, etc.)
   ∘ Marks should be easily repositioned
- The system should be easy to operate in a dark environment, and (particularly when aligning projectors) should ideally be amenable to some form of remote control.
- It should be convenient and ergonomic to operate by a technician - ideally leaving one or both hands free to make adjustments to projectors and other components.
- The system should be as independent as possible from the projection system, and avoid the need to be operatively connected to it.
- It should provide visual feedback to the technician making adjustments in positioning and alignment on physical components and on projected images or test patterns. Such visual feedback should be 3 dimensional - e.g. provide azimuth angle, elevation angle and distance.
- The system should have the capability to measure and compensate for discrepancies between actual screen geometry and the ideal or intended design geometry, and to determine the screen centre or optimum viewing point (eyepoint) from such measurements.
- Where the screen is supported by pressurised (or evacuated) chambers, it should have the capability to monitor changes in screen geometry and to regulate the pressures in such chambers.
- It should have the capability to measure and record the geometry of the screen, the illuminated region of each display channel and any projected image or test pattern. Such process should be largely automated. Such measured information can be compared with the original design for confirming the fidelity of the installation and made available for subsequent image corrections, such as calibration, warping, blending and brightness or gamma correction.

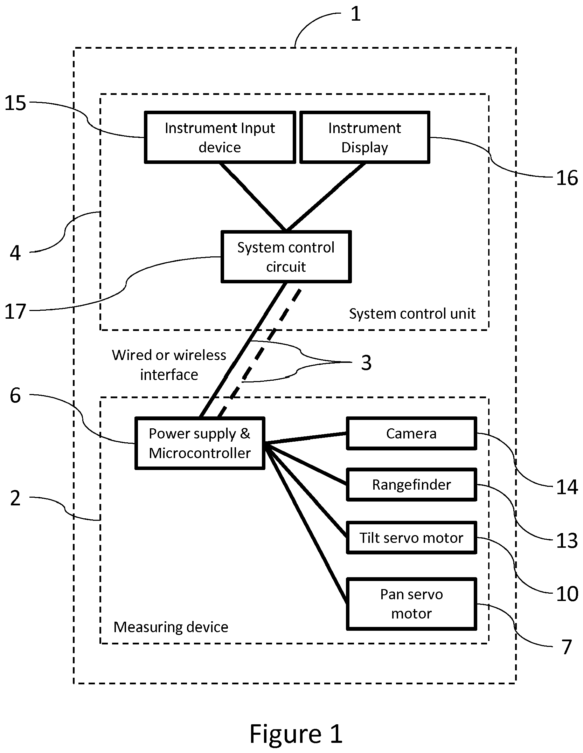

In order to solve the problems described above. The system of the present invention employs a measuring device (2) similar to the prior-art device described in U.S. Pat. No. 8730130, but adapted with a computer-mediated or "Augmented Reality" (AR) display (16) to facilitate the complex tasks of accurate installation, location and alignment of complex multi-channel displays. Figure 1 shows a block diagram of a measuring system according to the invention, in which the system controller (17), system display screen (16) and input device (15) are physically separate from the measuring device (2). The measuring device (2) is a servo-driven gimbal-mounted camera and rangefinder measuring head. Whereas the prior art device must be operatively connected to the projection system in order to display the required test patterns, the system according to the present invention need not be operatively connected, and requires only that a simple image or test grid is projected. In the early stages of system installation, the screen and projectors may not yet be installed, and therefore it is advantageous to have a self-sufficient system which can aid the installation from beginning to end.

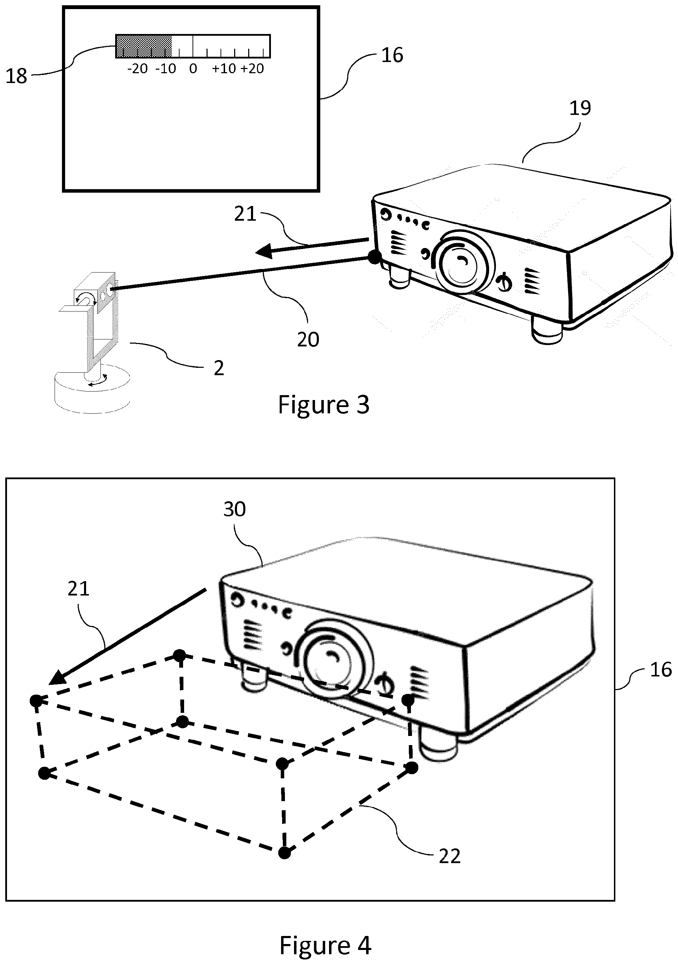

The prior art device according to U.S. Pat. No. 7090361 uses a plurality of individual light sources to display non-invasive test marks on the screen which must each be individually manually adjusted and aligned using some accurate reference device, such as a theodolite. By introducing the AR display, remotely connected to an accurate servo-driven measuring head, individual accurate "landmarks" may be generated at will using the laser rangefinder as a pointer, and multiple "landmarks" may be visualised simultaneously using the AR display, and act as a form of fiducial marker - similar to the scales or graticules used on reticles in microscopy, or the Reseau crosses appearing on NASA photographs. Simultaneous display of the intended display system design and the camera image provides visual feedback to the operator so that he may judge the required direction and magnitude of the required adjustments. Figure 4 illustrates how the position of a projector might be adjusted to coincide with a wireframe image of its design location.

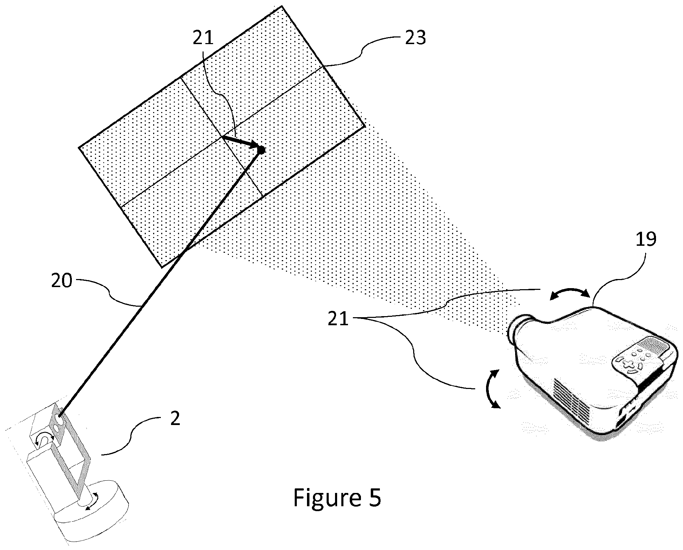

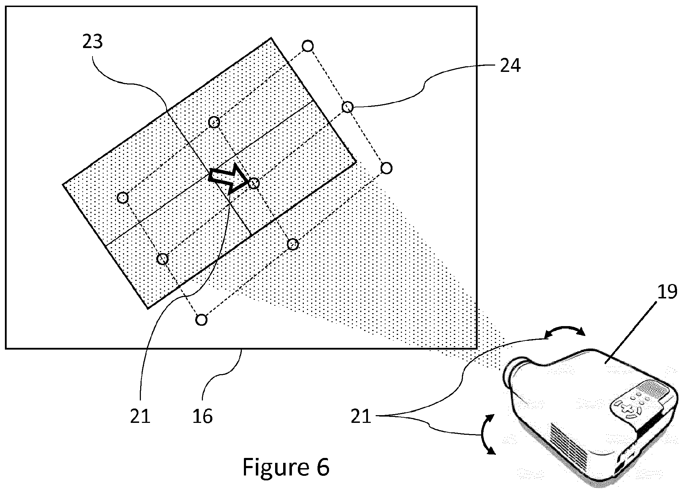

In this example we describe adjustments to the location of a physical object, but the same method may be used for adjustments to "projected objects. Figure 5 and Figure 6 show how the method might be used for aligning the projector axis or adjusting projector zoom.

If the rangefinder used is a laser rangefinder using laser light in the visible range, then the laser beam may also be used as an alignment guide. The laser pointer is easily seen in a dark environment, and if a red laser is chosen, it contrasts particularly well with a green projected test pattern. In practice, it may be convenient to use visual feedback in the "real world", by comparing the physical or projected objects with the laser beam, or in the "computer-mediated world", by comparing the objects detected by the camera with a design model. The choice may depend on ergonomic considerations, according to whether the operator needs both hands to make the required adjustments and whether he has line of sight to the required location. In practice, both methods may be used simultaneously. In certain circumstances ergonomic factors may make it impractical or even unsafe for the operator to use a handheld display while making adjustments. In such cases, according to the invention, the measuring device display may employ one or more of the projectors belonging to the immersive display.

U.S. Pat. No. 7090361 teaches a plurality of individual light sources to provide "landmarks" with which to align multiple features of the display, but in turn is reliant on an external reference to align the light sources. U.S. Pat. No. 8730130 teaches a laser rangefinder mounted on an accurate servo-driven gimbal mount. Such a device provides an accurately directed laser beam which may be used to provide one landmark at any one time. It might be theoretically possible to combine these two concepts so as to have multiple gimbal-mounted lasers, but such a system would be prohibitively expensive and also very complex to operate.

In the system according to the present invention a single accurately-directed laser-beam (20) is provided along with an "Augmented Reality" display (16) which shows an image of the surrounding objects. This Augmented Reality view combines a camera image of the "real world" with a computer-generated image of the intended design thus providing a context which assists the technician in the interpretation of the single laser spot. The technician is able to evaluate the physical arrangement and alignment of system elements in two ways:
- Comparing the camera image (30) of the actual arrangement with the intended design (24) as viewed on the instrument display (16)
- Comparing the "real world" position of the feature of interest with the design location as indicated by the laser beam (20).

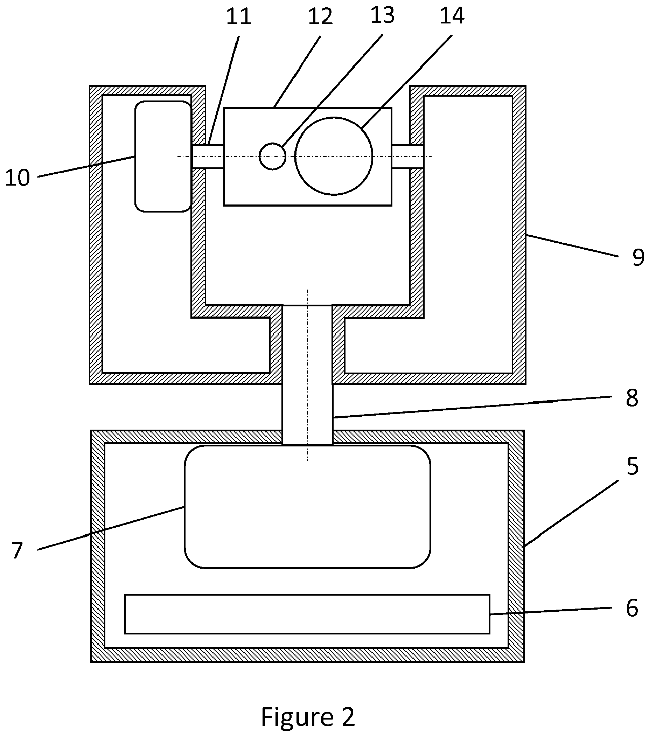

In the latter case, it is helpful if the colour of the laser beam contrasts well with the colour of any projected test image or grid (23). In practice it is found that a green test pattern and a red laser beam are easily distinguished. Laser diodes with wavelengths in the 620-690 nm range are readily available and are ideal. Figure 1 shows a system block diagram for one embodiment of the measuring instrument according to the invention, in which the system is configured to comprise the measuring device (2) and a separate system control unit (4) with a wired or wireless interface (3) providing intercommunication. The use of a wireless interface is advantageous, since the measuring device may be in a fixed location, while the system control unit may be portable and carried around by the technician as he makes mechanical adjustments. Figure 2 shows a mechanical arrangement for a possible embodiment of the measuring device (2) according to the invention.

In order to make it possible for the alignment task to be undertaken by a single technician, it is essential that the instrument display (16) is easily visible to him, wherever he is working. In some cases, it is advantageous to employ one of the display channels belonging to the immersive display system as the instrument display (16). Alternatively, if the instrument control unit (4) comprises a portable laptop or notebook computer, wirelessly connected to the measuring device, it may be advantageous to use a touch screen or a voice recognition system as an input device (15), thus freeing up one or more of the technician's hands to make the required adjustments.

Both the "real world" view (with the laser beam), and the "Augmented Reality" view provide the operator with a good visual references to guide adjustments in the directions corresponding to the azimuth and elevation angle movements of the measuring device. They provide limited information with which to make adjustments corresponding to the distance of the object from the measuring device. Accordingly the measuring system display is further provided with an indication of distance - preferably an indication of difference between the measured distance and the intended distance. Figure 3 shows how adjustments may be made using a combination of the laser beam and such distance indication. Alternatively, the measuring device may be moved to a different vantage point, such as a side-view, in order to make such an adjustment. Because the device (2) is able to measure distance as well as azimuth and elevation angles, it may be readily relocated, using one or more reference points on the immersive display to make a transformation to its new coordinate system.

Frequently a "design eyepoint" is defined for the immersive display, and this is often close to the geometric centre of the immersive display. In such cases it may be inconvenient to locate the measuring device close to the design eyepoint. According to the invention, measurements of azimuth, elevation and distance may be indicated on the measuring instrument display using both the coordinate system of the measuring device and also that of the design eyepoint. The associated coordinate transformation is accomplished by the measuring system control circuit (17).

In cases where the intended shape of the screen is symmetrical, such as spherical, spheroidal, cylindrical, it may be helpful to determine the axis or centre of symmetry, so that the design eyepoint may be identified. According to the invention, the measuring system control circuit (17) will determine the location of such axis or centre of symmetry from a plurality of measurement points, using a fitting algorithm such as the Iterative Closest Point (ICP) method.

In order to facilitate the construction and configuration of the immersive display by personnel of moderate skill and experience, according to the invention, the measuring instrument display may further incorporate a sequential list of the assembly and alignment tasks to be performed.

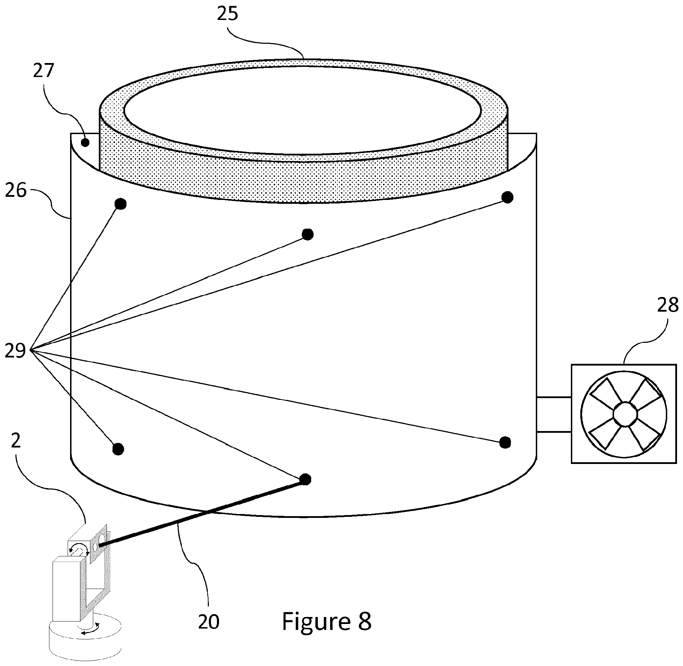

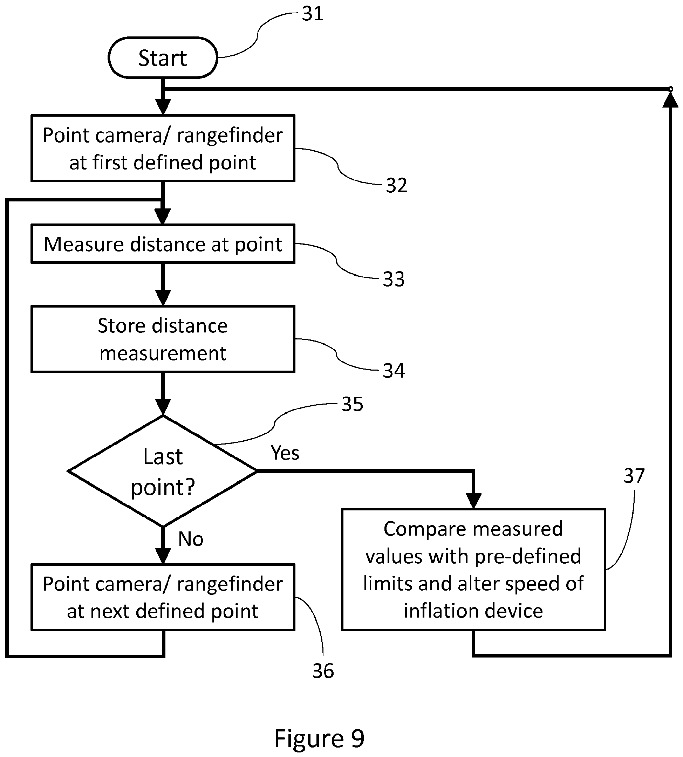

According to the invention, there is also provided a method (illustrated in Figure 8) for continuously monitoring the geometry of the screen, in cases where the screen is supported by one or more pressurised (or evacuated) chambers (27), and where the geometry of the screen may be affected by changes in pressure in said chambers. One or more pre-defined monitoring points (29) are specified, and distance measurements are made at these locations in an automated sequence. These measurements are compared with pre-defined limits, and the pressure in the chambers is adjusted so as to bring the distance back within the pre-defined limits. The pressure adjustment may be achieved, for example, by regulating the speed of an inflation device (28). Figure 9 shows a flow diagram to summarise such an automated measuring sequence.

According to the invention, there is also provided a method (illustrated in Figure 3) to align elements of the immersive display using the laser beam (20) as a visual reference. The element may be a physical item of equipment, such as a projector, or a projected feature, such as a corner of the area illuminated by a projector, or a feature in a projected image or test pattern (23). Figure 5 illustrates how the laser beam (20) may be used to align the axis of a projector (19), using the cross hairs in a test pattern (23). The operator compares the position of the cross hairs with the position of the laser spot and adjusts the projector accordingly.

In a further improvement to this method, the operator uses the distance indication (18) in combination with the laser beam (20) so as to provide a better guide to correct positioning in respect of distance from the measuring device (2). This method is illustrated in Figure 3.

According to the invention, there is provided a further method to align elements of the immersive display using the Augmented Reality display (16) described above. In this method, the technician compares the position of the chosen object (30) as detected by the camera (14) with the design location of that object (22) and makes adjustments until the two positions coincide within acceptable limits. This method is illustrated in Figure 4.

Depending on the circumstances, the methods described above, using the laser beam (20), the distance indication (18) and the Augmented Reality feature may all provide useful information to the technician and according to the invention any combination or permutation of these methods may be used simultaneously.

According to the invention, the system control circuit (4) may include video processing software. Once the camera (14) has been directed to detect the edge of the projected image or test pattern (23) from one projector, this software can automatically track the edge of the projected pattern, taking measurements of azimuth and elevation angle and distance, and also (if desired) recording camera images, at chosen intervals around the display border (38). Such data may be combined so as to provide a 3-dimensional representation of the display borders relating to each display channel of a multi-channel display system.

According to the invention, the display border geometry information described above may be used to determine a range of azimuth and elevation angles for each display channel. Using this information, a grid-wise scan of the interior of the display region may be performed at intervals of azimuth and elevation angle specified by the operator (38). At each measurement point, azimuth and elevation angle and distance measurements may be recorded and (if desired) camera image data also. Such data may be combined so as to provide a 3-dimensional representation of the display areas relating to each display channel of a multi-channel display system.

According to the invention, the display border geometry and display area data acquired using the methods described above may be combined so as to form a complete 3-dimensional geometric model of the screen surface, and the camera image data acquired for multiple display channels may be used to render the screen model with a complete image - thus providing a simulation of the entire immersive display.

### Description of drawings

Figure 1 shows a block diagram of a measuring instrument (1) according to the invention. The instrument (1) comprises a measuring device (2) and a separate system control unit (4) connected by a communication interface (3) which may be wired or wireless. The system control unit (4) incorporates a system control circuit (17) a display screen (16) and input devices (15), such as an input pointing device and keyboard. In a preferred embodiment, the system control unit is a laptop or tablet computer, with suitable software.
Figure 2 shows a preferred mechanical arrangement for measuring device (2). A base housing (5) contains a power supply and control circuitry (6) and a pan servo motor (7) for adjusting azimuth position. The shaft (8) of this pan servo motor (7) supports an intermediate housing (9) which contains a second tilt servo motor (10) for adjustment of elevation angle. The shaft (11) of this motor supports a sensing unit housing (12) containing the rangefinder (13) and image-receiving device (14) which are arranged to be either close together or coaxial. Since the intermediate tilt motor housing (9) is movable, the electrical signals to the tilt servo motor (10) may be transmitted from the base housing (5) to the intermediate housing (9) using either flexible cable looms, slip rings or wireless transmission (not shown).
Figure 3 shows how the position of a physical object - in this case projector (19) may be adjusted using as a guide the laser beam (20) emitted by the measuring device (2) and also the distance indication (18) displayed on the measuring instrument display (16). Positional adjustment (21) is made to align a chosen feature of the object (19) with the laser beam and also to reduce the error indicated by the distance indication (18) within acceptable limits.
Figure 4 shows how the position of a physical object - in this case a projector - may be adjusted using the Augmented Reality image displayed on the measuring instrument display (16). The display (16) simultaneously shows the design (or intended) location (22) of the projector and also a live camera image of the projector (30). Positional adjustment (21) of the projector is made until the camera image (30) coincides with the design location (22) within acceptable limits.
Figure 5 shows how the position of a projected image or test pattern (23) may be adjusted using the laser beam (20) emitted by the measuring device (2). Angular adjustments (21) are made to the projector (19) until the centre of the projected image (23) coincides with the laser beam (20) within acceptable limits.
Figure 6 shows how the position of a projected image or test pattern (23) may be adjusted using the Augmented Reality image displayed on the measuring instrument display (16). The display (16) simultaneously shows the design (or intended) location (24) of the projected image (23) and also a live camera image of the projected image (23). Angular adjustment (21) of the projector (19) is made until the camera image of the projected image (23) coincides with the design location (24) within acceptable limits.

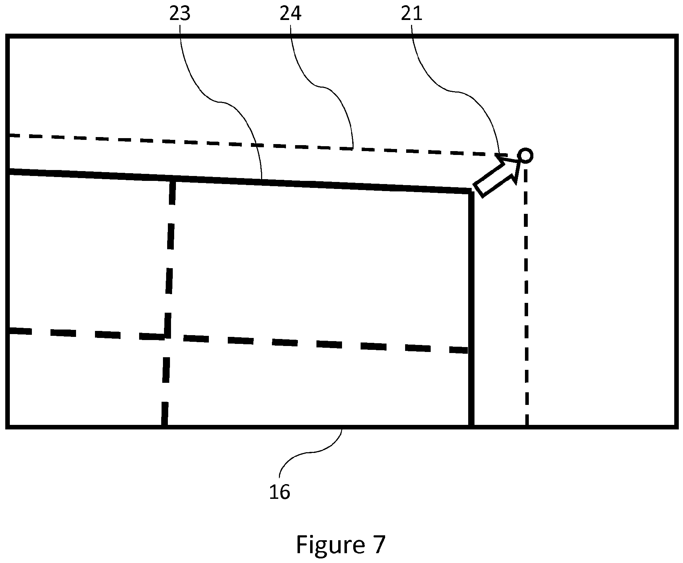

Figure 7 shows how a projector zoom adjustment may be made using the Augmented Reality image displayed on the measuring instrument display (16). The display (16) simultaneously shows the design (or intended) location (24) of the projected image (23) and also a live camera image of the projected image (23). Zoom adjustment (21) of the projector (19) is made until the chosen corner of the projected test pattern seen in camera image (23) coincides with the design location of the corresponding corner(24) within acceptable limits. Each corner of the projected test pattern (23) may be viewed in turn, and the projector zoom adjusted until satisfactory agreement is achieved at all corners.
Figure 8 shows an air-supported membrane screen (26), supported by a structural support (25) and a pressurised chamber (27). The measuring device (2) may be used to take distance measurements at a number of pre-defined measurement points (29). According to the measured values, the inflation device (28) may be controlled or regulated to maintain geometry of the membrane screen within predefined limits.
Figure 9 shows a flow diagram for making multiple geometry measurements (33) on an air-supported membrane screen (26). Following the process start (31), the camera (14) and rangefinder (13) are pointed at the first defined point (32), a rangefinder measurement is made (33) and stored (34). If the last point in the sequence has not been reached (35), the rangefinder (13) is directed to the next defined point (36), and measurements repeated. On reaching the last point (35), comparison of measurements with pre-defined limits is made (37) and alterations made (if needed) to the speed of the inflation device (28). This measuring sequence may be run repeatedly to ensure that the screen geometry remains within specified limits.

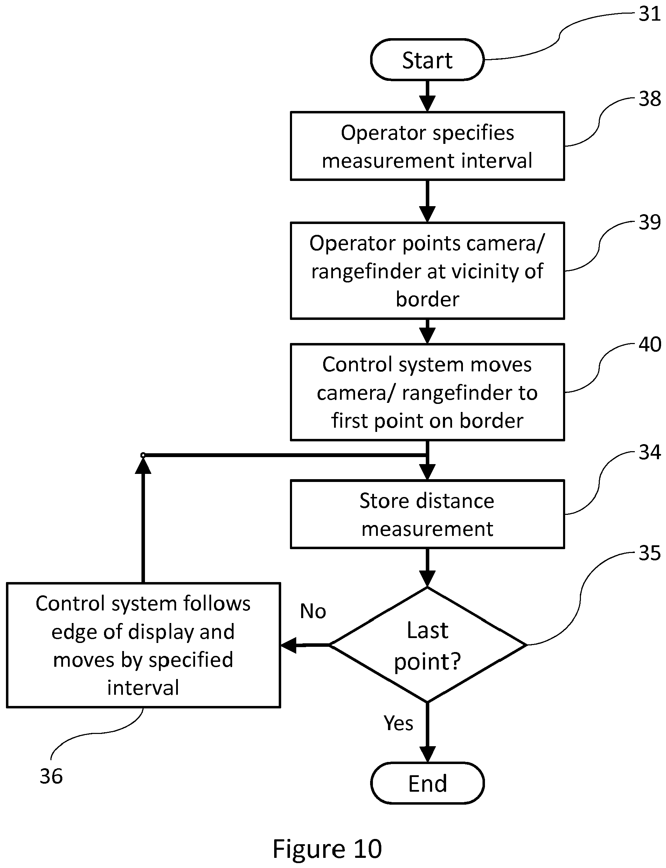

Figure 10 shows a flow diagram for making semi-automated measurements on the display border belonging to a single display channel. Following the process start (31), the operator specifies a measurement interval (38). He must then point the camera (14) and rangefinder (13) in the vicinity of the display border (39). Using video processing software to detect the edge of the display area, the control system moves the camera and rangefinder to a starting point on that edge (40). A distance measurement (and camera image if desired) is taken and stored (34). If the last point has not been reached (35) the camera moves along the border by the chosen interval (38) and stores another measurement (34), until the process is repeated until the end point is reached.

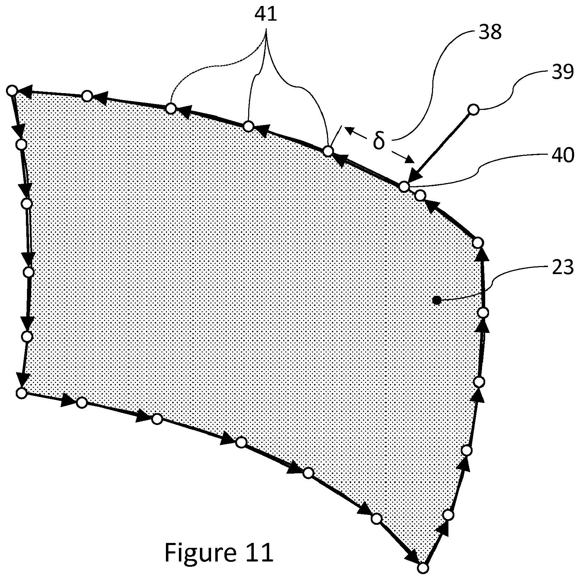

Figure 11 shows a typical movement trajectory for the above display border measurement, as the camera (14) and rangefinder (13) follow the border of the display region (23) moving from the first point (40), following the border and moving by the specified interval (38). At each measurement point (41) a distance measurement (and camera image if desired) is made and recorded. Repeated measurements are made until the end point is reached.

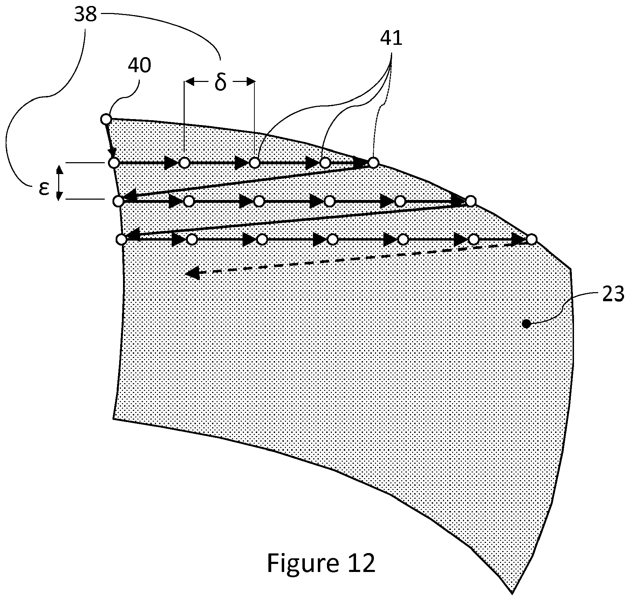

Figure 12 shows a typical movement trajectory for making a scan of the complete display region (23). Using the previously described display border measurement to define the limits of azimuth and elevation angle, the rangefinder (13) and camera (14) perform a raster scan, beginning at one corner (40) and making distance measurements (41) (and camera images if desired) at intervals specified by the user (38) until the entire region has been measured.
Figure 13 shows the configuration the prior art device according to U.S. Pat. No. 7090361, comprising a mounting frame (42), laser diodes (43), and deformable mountings (44) which permit the laser diodes to be directed at a chosen point.
Figure 14 shows the typical usage of the prior art device according to U.S. Pat. No. 7090361 on a typical display channel, with 5 outline points (45) and 20 warp points (46).

### Description of preferred embodiment

In a preferred embodiment, the measuring system (1) will comprise the elements shown in Figure 1, which shows two principal subsystems - the system controller (4) and the measuring device (2) connected by wired or preferably wireless interface.

The measuring device (2) will comprise the components shown in Figure 2, where a base housing (5) encloses a power supply and microcontroller (6) and an accurate servo motor (7) which provides rotation of a pan motor shaft (8) which accomplishes motion in the azimuth direction. To the pan motor shaft (8) is attached an intermediate tilt motor housing (9), enclosing a further accurate servo motor (10) which accomplishes motion in the elevation direction. To the elevation motor shaft (11), is attached a sensing unit housing (12), which encloses a distance measuring device (13), such as a laser rangefinder, and an image sensing device (14), such as a CMOS or CCD camera. It will be necessary to provide electrical connections (not shown) between the power supply and microcontroller (6) in the stationary base housing to the tilt motor (10) and sensing assembly (12) which are in the moving housings. According to preference, these connections may be made using flexible wiring looms, slip rings or wireless transmission (or any combination thereof). In an alternative embodiment, the orientation of the pan motor (7) may be reversed so as to be located in the tilt motor housing (9), with its shaft connected to the base housing (5). The power supply may be provided from an external source or power adaptor, or (to improve portability and convenience), it may include a rechargeable battery. In the preferred embodiment, the rangefinder (13) is a laser rangefinder, using laser light in the visible range, and with the laser beam aligned with the axis of the camera, so that the laser beam (20) may be used as a pointer - providing to the operator a visual reference with which to align the system. To provide a clear contrast between the projected test pattern and the laser beam, it is preferred to project the test pattern in green and to use a red laser - preferably with wavelength in the 620-690 nm range.

The complete system will further comprise a system control unit (4), with one or more input devices (15) and a display (16), as shown in Figure 1. For the convenience of the operator, these elements will be housed in a single portable unit, separate from the measuring unit (2), so that he is able to move around the installation making the necessary adjustments. To give him maximum freedom and so as not to disturb the sensitive measuring unit (2), the connection (3) between the system controller and the measuring unit will be a wireless connection, such as Wi-Fi™ (IEEE 802.11b wireless network) or Bluetooth® (IEEE 802.15.1) interface, but wired connections, such as USB, RS232, and Ethernet are also possible. In the preferred embodiment, the system controller (4) will be a laptop or tablet computer with integrated display, keyboard and pointing device (such as a mouse, trackball, or touch screen), and the connection will be by Wi-Fi™. Since the user may require the use of both hands to make adjustments to the display system, in a further preferred embodiment a voice recognition system will be included in the input devices.

The instrument display (16) will provide a simultaneous display of:
- the design geometry of the immersive display system, and
- the image captured by the camera (14)

In the preferred embodiment, these two images will be overlaid in the display, so that the operator may easily make a visual comparison of their positions and make the required adjustments until he is satisfied that the installation conforms to the intended design within acceptable limits. Ideally, such a display will include a zoom facility, so that a close examination may be made of any discrepancies.

Such a display will ideally be easily configurable to provide a perspective view of the 3-dimensional design layout from any chosen viewpoint, with the camera image rendered onto the screen surface, or (if preferred), the design layout may be viewed from the viewpoint of the camera. It may be convenient to display the elements of the immersive display either in a transparent wireframe format or with surfaces rendered in an opaque or semi-opaque colour. Ideally the control interface should permit the operator to configure the display of any chosen element or group of elements to be visible or invisible, and to be rendered in any chosen colour so as to contrast with the camera image.

The style of display according to the present invention could be describes as a form of "Augmented Reality" (AR) or "computer-mediated" reality. According to a Wikipedia definition, ***"Augmented Reality is a live direct or indirect view of a physical, real-world environment whose elements are augmented by computer-generated or extracted real-world sensory input such as sound, video, graphics or GPS data".*** In the implementation described, it solves the particular difficulties of displaying accurate test patterns or "landmarks" on smooth, featureless display screens, and of making such marks non-invasive - that is, marks which are easily erased or moved, and which do not detract from or interfere with the projected image when the immersive display is in use.

## Claims

1. In an immersive display having at least one screen, at least one image source and supporting means for said screen and image source, a measuring device comprising:
a) Sensing assembly comprising a distance measuring means and an image receiving means, mechanically attached to it and substantially coaxial with it
b) Actuation means for said sensing assembly, capable of directing them to a chosen azimuth and elevation angle
c) A control system communicating with said sensing assembly and actuation means, having one or more input means and one or more display means
**characterised in that** said display means simultaneously displays:
i) An image of the intended locations of one or more display elements including but not limited to said immersive display screen, image source, and supporting means, and the intended borders and intended centre of the projected image
ii) An image of the actual locations of said display elements measured by said image receiving means.

2. A device according to Claim 1 where the distance measuring means is a laser rangefinder using light in the visible spectrum

3. A device according to Claim 2 where the laser rangefinder uses light with wavelength in the 620-690 nm range

4. A device according to Claims 1 to 3 where said display means of said measuring device comprises said screen and said image source.

5. A device according to Claims 1 to 4 where said input means includes a touch-sensitive display

6. A device according to Claims 1 to 4 where said input means includes a voice recognition system

7. A device according to Claims 1 to 6 where said display means of said measurement means also provides an indication of the distance measured by said distance measuring means relative to intended distance.

8. A device according to Claims 1 to 7 where said display means of said measurement means displays distance, azimuth angle and elevation angle in the coordinate system of said measurement means and in at least one other coordinate system.

9. A device according to Claims 1 to 8 where the intended shape of said screen is a regular symmetric shape, including but not limited to a cylinder, sphere or oblate spheroid and where said measurement means has an automated procedure for making multiple geometry measurements of said projection surface, and for estimating from said measurements the actual screen centre using a best fit method, including but not limited to Iterative Closest Point (ICP) method.

10. A device according to Claims 1 to 9 where said display means of said measuring device also provides a sequential list of measurement and adjustment tasks to be completed by an operator.

11. In an immersive display having at least one screen, one image source and a supporting means for said screen which includes one or more chamber containing gas at a pressure lower or higher than ambient pressure, an automated method using the measuring device of Claims 1 to 10 for regulating said pressure in said chamber of said supporting means comprising the following steps:
a) Said distance measuring means is directed to one or more predefined locations on the projection surface
b) One or more measurements of distance are made at each of said locations and compared with predefined values or limits
c) the pressure in said chamber of said supporting means is adjusted to maintain said distance measurements within predefined limits.

12. A method using the measuring device of Claims 1 to 10 for adjusting said projection means, said projection surface, and said supporting means, to be located and aligned in accordance with predefined positions, whereby:
a) The measurement means is positioned in the vicinity of the said projection means and said projection surface
b) The laser beam from said distance measuring means is moved so as to point at the intended position of a chosen element or feature of the said projection means, projection surface, or supporting means
c) The position or orientation of said element is adjusted so as to coincide with the position of the laser beam within predefined limits.

13. A method using the measuring device of Claims 1 to 10 for adjusting said projection means, said projection surface, and said supporting means to be located and aligned in accordance with predefined positions, whereby:
a) The measurement means is positioned in the vicinity of the said projection means and said projection surface
b) The laser beam from said distance measuring means is moved so as to point at the intended position of a chosen element or feature of the said projection means, projection surface, or supporting means
c) The position or orientation of said display element is adjusted so as to coincide with the position of the laser beam within predefined limits, using the indication described in Claim 5 to ensure the distance of said display element coincides with the intended distance within predefined limits.

14. A method using the measuring device of Claims 1 to 10 for adjusting said projection means, said projection surface, and said supporting means to be located and aligned in accordance with predefined positions, whereby the operator uses said simultaneous display to compare the display element's intended position with the actual location measured by said image receiving means, making adjustments until the display element is in the intended position or within predefined limits.

15. A method for adjusting said projection means, said projection surface, and said supporting means to be located and aligned in accordance with predefined positions, using combination of two or more of the techniques described in Claims 12 to 14.

16. A partially automated method using the measuring device of Claims 1 to 10 for measuring the position of the border of the screen region illuminated by a chosen image source whereby
a) Said chosen image source is switched on so as to illuminate said screen region
b) Said image receiving means is directed by the operator to a portion of said border of said illuminated region
c) Automated Image analysis is used to direct said sensing assembly to track said border
d) Images from said image receiving means, distance measurements from said distance measuring means, and azimuth and elevation angles are recorded at chosen intervals around said border.

17. A partially automated method using the measuring device of Claims 1 to 10 for measuring the geometry of the interior of the screen region illuminated by a chosen image source whereby
a) The position of the border of said region is measured using the method of Claim 16
b) Said sensing assembly is directed to a succession of points at chosen intervals of azimuth and elevation angle within said measured region.
c) Images from said image receiving means, distance measurements from said distance measuring means, and azimuth and elevation angles are recorded at said chosen intervals.

18. A partially automated method using the measuring device of Claims 1 to 10 for creating a composite image of said immersive display whereby
a) Measurements of said regions illuminated by a plurality of said image sources are made according to the methods of Claims 16 or 17
b) Said measurements are combined to form a composite image of the complete immersive display showing
i) the positions of the borders of said regions illuminated by said image sources
ii) the images projected on the screen by said image sources
